(19) Europäisches Patentamt / European Patent Office / Office européen des brevets

(11) **EP 2 673 651 B1**

(12) **FASCICULE DE BREVET EUROPEEN**

(45) Date de publication et mention de la délivrance du brevet:
**04.03.2015 Bulletin 2015/10**

(21) Numéro de dépôt: **12700068.5**

(22) Date de dépôt: **06.01.2012**

(51) Int Cl.:
*H01Q 25/02* *(2006.01)*   *H01Q 21/20* *(2006.01)*
*H01Q 21/28* *(2006.01)*   *G01S 3/46* *(2006.01)*
*G01S 3/66* *(2006.01)*   *H01Q 3/02* *(2006.01)*
*G01S 3/40* *(2006.01)*   *H01Q 25/00* *(2006.01)*

(86) Numéro de dépôt international:
**PCT/EP2012/050196**

(87) Numéro de publication internationale:
**WO 2012/107250 (16.08.2012 Gazette 2012/33)**

(54) **DISPOSITIF DE RECEPTION LARGE BANDE PAR AUTOTRANSPOSITION ET APPLICATION A LA DETECTION ET A LA CARACTERISATION D'EMISSIONS RADIOELECTRIQUES**

VORRICHTUNG FÜR BREITBAND-EMPFANG DURCH AUTOTRANSPOSITION UND ANWENDUNG ZUR ERKENNUNG UND CHARAKTERISIERUNG VON RADIOELEKTRISCHEN EMISSIONEN

DEVICE FOR BROADBAND RECEPTION BY AUTOTRANSPOSITION AND APPLICATION TO THE DETECTION AND CHARACTERIZATION OF RADIOELECTRIC EMISSIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2011 FR 1100409**

(43) Date de publication de la demande:
**18.12.2013 Bulletin 2013/51**

(73) Titulaire: **THALES**
**92200 Neuilly-sur-Seine (FR)**

(72) Inventeurs:
• **CORNIC, Pascal**
**F-29820 Guilers (FR)**
• **JAHAN, Daniel**
**F-29820 Bohars (FR)**
• **GARREC, Patrick**
**F-33700 Merignac (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 742 551    GB-A- 2 232 843**

**Description**

L'invention se rapporte au domaine général des dispositifs de détection de signaux électromagnétiques, et en particulier pour ceux ayant une très large gamme de fréquence d'émission à recevoir, comme par exemple les détecteurs de radars.

Le fonctionnement des dispositifs de détection de signaux électromagnétiques actuels reposent, de manière connue, sur deux principes différents :

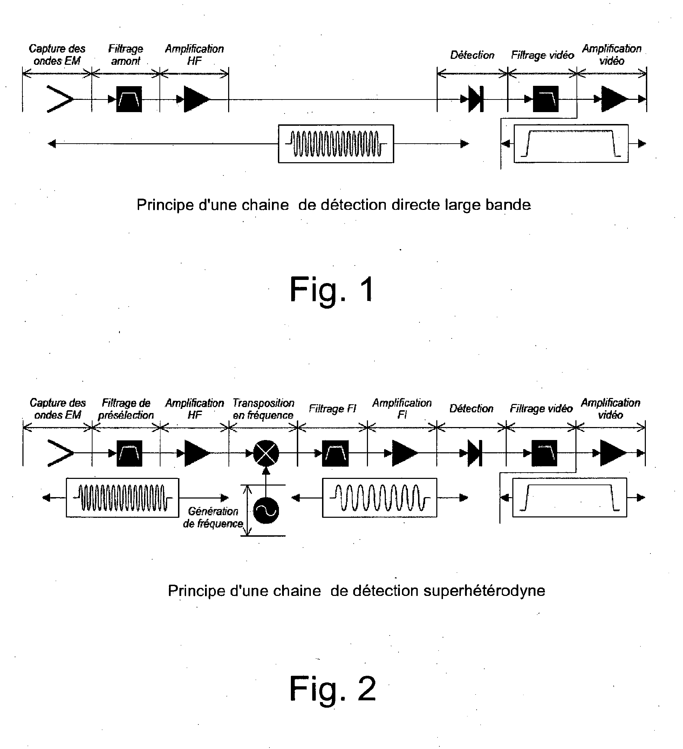

- La détection directe à très large bande dont le principe est illustré par la figure 1,
- La réception superhétérodyne en bande étroite dont le principe est illustré par la figure 2.

La détection directe à très large bande, dans une bande s'étendant par exemple entre 2 et 18GHz, présente l'avantage de la simplicité matérielle. Sa mise en oeuvre est donc d'un coût relativement faible. Par ailleurs, elle permet, par principe, une visibilité instantanée sur l'ensemble de la bande spectrale d'intérêt. Par suite la probabilité d'intercepter un signal est avantageusement maximale. Toutefois, l'inconvénient majeur de ce principe est de ne pas présenter de sélectivité fréquentielle, ce qui est considéré comme pénalisant dans le cas d'un fonctionnement dans un environnement dense, c'est-à-dire chargé de signaux radioélectriques de fréquences diverses.

La réception superhétérodyne a pour caractéristique essentielle d'être sélective du fait de l'utilisation d'un filtre passe-bande, défini comme étant notablement plus étroit que la totalité de la bande à couvrir (le filtre de fréquence intermédiaire : FI). Pour cela, elle implique la transposition du signal en fréquence intermédiaire.

Par suite, la couverture totale de la bande spectrale d'intérêt, 2 à 18GHz par exemple, se fait classiquement en balayant celle-ci, mais au détriment de la probabilité d'intercepter des signaux fugaces comme des impulsions. Pour éviter ce désagrément, il faudrait mettre en parallèle autant de chaînes de réception de ce type qu'il y a de largeur de bande FI dans la bande totale à couvrir. Ceci aurait pour conséquence directe d'accroître de manière excessive la complexité matérielle de la fonction de réception, et donc son coût. En conséquence, on ne le fait généralement pas.

Par suite, la tendance actuelle, lorsqu'on utilise un système de réception superhétérodyne, est d'élargir la bande passante FI et, afin de conserver la sélectivité voulue, de procéder à une analyse spectrale dans la bande FI, par FFT (Fast Fourier Transform ou transformée de Fourier rapide) par exemple. La probabilité d'interception reste toutefois plus faible que dans le cas de la réception directe en bande large. Par ailleurs, ce principe de réception en bande étroite, qui limite la bande de bruit hyperfréquence, n'améliore la sensibilité que dans une modeste mesure. En outre, la multiplication des voies de réception complète (récepteur superhétérodyne et analyseur spectral), pour traiter en parallèle les signaux issus bien souvent d'au moins quatre antennes, a également pour conséquence d'induire une complexité matérielle et donc un coût élevé.

Ces deux types de réception sont généralement associés à des dispositifs antennaires présentant peu de gain. Le principe observé est généralement de couvrir une plage angulaire de 360° en gisement avec un nombre d'antennes restreint, de façon notamment à minimiser le nombre de voies de réception parallèles nécessaires pour traiter simultanément les signaux correspondant au front d'onde intercepté. Le nombre d'antennes étant restreint, on utilise des antennes présentant une faible directivité et donc un gain moindre. Ce faible gain d'antenne est par suite préjudiciable à la sensibilité, sur laquelle il a une influence directe, contrairement à la réduction de bande de bruit hyperfréquence.

Pour certaines applications, il est également connu d'utiliser des systèmes de réception superhétérodyne comportant des antennes tournantes à grand gain. Cependant la probabilité d'interception de tels systèmes reste très faible. En effet, la couverture efficace de la bande spectrale d'intérêt et de l'ouverture angulaire souhaitée, 360° en gisement par exemple, nécessite de procéder à un nombre significatif de balayages de l'espace fréquence-gisement.

Aussi, d'une manière générale, les récepteurs ne sont pas vraiment adaptés à des durées de signaux pouvant varier dans une large plage, ce qui ne leur permet pas d'être optimaux en terme de sensibilité, en particulier pour des formes d'onde à très faible puissance crête, les formes d'onde mises en oeuvre par les émissions de type LPI (Low Probability of Intercept selon la dénomination anglo-saxonne), par exemple, des formes d'onde à modulation de fréquence linéaire (i.e. FMCW ou Frequency Modulated Continuous Wave selon la dénomination anglo-saxonne), ou encore des formes d'onde à modulation par code de phase.

Un document FR 2 742 551 A1 divulgue un dispositif de réception de signaux électromagnétiques.

Un but de l'invention est de proposer un dispositif de réception alternatif, à très large bande passante, à très haute sensibilité et à probabilité d'interception élevée. Un autre but de l'invention est de proposer un dispositif de réception avantageux en termes de coût.

A cet effet l'invention a pour objet un dispositif de réception large bande, adapté à la réception d'émissions radioélectriques de fréquence centrale $F_0$ comprise dans une bande de fréquences BH. Le dispositif selon l'invention comporte au moins :

- deux antennes identiques très large bande à grand gain, directives dans au moins un plan, les deux antennes étant pointées sensiblement dans la même direction, chacune des antennes produisant à partir des émissions captées un signal radioélectrique S1 ou S2 ;
- une chaîne de réception comportant deux oscillateurs locaux cohérents en phase, de fréquences respectives F1 et F2=F1+FI supérieures à la fréquence maximale de la bande BH, ladite chaîne de réception réalisant la démodulation des signaux radioélectriques S1 et S2 en un signal en fréquence intermédiaire FI.

Selon l'invention, le signal en fréquence intermédiaire est obtenu en deux étapes :

- en démodulant d'abord le signal S1 ou le signal S2 par un signal respectivement obtenu par transposition en fréquence de l'autre signal, le signal S2 ou S1 respectivement, au moyen de l'oscillateur local de fréquence F1 et en sélectionnant la bande latérale inférieure du spectre obtenu. Le signal démodulé obtenu est quant à lui filtré de façon à ne conserver que la bande latérale supérieure du spectre obtenu après démodulation ;
- en transposant ensuite en fréquence intermédiaire, FI, le signal obtenu par démodulation du signal S1 ou S2 au moyen de l'oscillateur local de fréquence F2= F1+FI.

Le signal en fréquence intermédiaire ainsi produit est centré sur une fréquence intermédiaire FI constante quelle que soit la fréquence centrale $F_0$ des signaux reçus.

L'invention a également pour objet un dispositif de réception large bande adapté à la réception d'émissions radioélectriques de fréquence centrale $F_0$ comprise dans une bande de fréquences BH. Le dispositif selon l'invention comporte au moins :

- deux antennes identiques très large bande à grand gain, directives dans au moins un plan, les deux antennes étant pointées sensiblement dans la même direction, chacune des antennes produisant à partir des émissions captées un signal radioélectrique S1 ou S2 ;
- une chaîne de réception comportant deux oscillateurs locaux, de fréquences respectives F1 et F2=F1+FI supérieures à la fréquence maximale de la bande BH, ladite chaîne de réception réalisant la démodulation des signaux radioélectriques S1 et S2 en deux signaux en fréquence intermédiaire $I1_{FI}$ et $Q2_{FI}$.

Selon l'invention, les deux signaux en fréquence intermédiaire sont obtenus en deux étapes :

- en démodulant d'abord chacun des deux signaux S1 ou S2 par un signal, $Q_{S2}$ ou $I_{S1}$ respectivement, obtenu par transposition en fréquence de l'autre signal, le signal S2 ou S1 respectivement, au moyen d'un signal de fréquence F1 respectivement en quadrature de phase ou en phase avec l'oscillateur local de fréquence F1 et en sélectionnant la bande latérale inférieure du spectre obtenu. Les signaux démodulés I1 et Q2 obtenus sont quant à eux filtrés de façon à ne conserver que la bande latérale supérieure du spectre obtenu après démodulation ;

- en transposant ensuite en fréquence intermédiaire, FI, les signaux I1 et Q2 obtenus par démodulation des signaux S1 et S2 au moyen de l'oscillateur local de fréquence F2= F1+FI.

Les signaux en fréquence intermédiaire $I1_{FI}$ et $Q2_{FI}$ ainsi produits sont centrés sur une fréquence intermédiaire FI constante quelle que soit la fréquence centrale $F_0$ des signaux reçus.

Selon un mode de réalisation du dispositif selon l'invention, les antennes sont contiguës et agencées selon une configuration monopulse de phase, de telle façon que leurs axes de visée soient dirigés dans la même direction.

Selon un autre mode de réalisation du dispositif selon l'invention, les antennes sont agencées, selon une configuration d'antenne monopulse d'amplitude, de telle façon que leurs centres de phase soient situés au même endroit, et qu'elles pointent dans des directions non parallèles, distinctes l'une de l'autre d'un angle a égal à une portion de leur ouverture angulaire.

Selon un autre mode de réalisation du dispositif selon l'invention, les antennes sont agencées, selon une configuration formant une base d'interférométrie ambiguë, de façon à être séparées l'une de l'autre par un espace et à viser dans la même direction.

Selon un autre mode de réalisation du dispositif selon l'invention, les antennes sont agencées de façon à être espacées l'une de l'autre et viser dans des directions décalées l'une par rapport à l'autre d'un angle correspondant à une portion de l'ouverture angulaire.

Selon un mode de réalisation préféré du dispositif selon l'invention, l'ensemble antennaire est directif en gisement.

Selon un autre mode de réalisation du dispositif selon l'invention, l'ensemble antennaire est mobile en rotation selon un balayage mécanique autour d'un axe vertical, de façon à couvrir un secteur angulaire inférieur ou égal à 360 ° en gisement.

Selon un autre mode de réalisation préféré du dispositif selon l'invention, chaque antenne est constituée de sous-réseaux indépendants, couvrant des bandes de fréquences adjacentes, l'ensemble des sous-réseaux couvrant la totalité de la bande de fréquences BH à explorer.

Selon une variante du mode de réalisation précédent, les antennes sont constituées de sous-réseaux agencés dans un même plan vertical selon des colonnes adjacentes formées de sous-réseaux superposés.

Selon une autre variante du mode de réalisation précédent, les antennes sont constituées de sous-réseaux agencés dans des plans verticaux placés dos-à-dos.

Selon une autre variante du mode de réalisation précédent, les antennes sont constituées de sous-réseaux agencés sur les faces d'un prisme à base polygonale mobile en rotation autour d'un axe.

Selon une variante préférée du mode de réalisation précédent, chaque sous-réseau comporte une sortie spécifique à laquelle sont associés des moyens de limitation, d'amplification et de filtrage.

Selon une variante préférée du mode de réalisation précédent, les sorties des sous-réseaux qui forment une même antenne sont sommées après amplification et filtrage, pour former une sortie unique par antenne.

Selon une autre variante du mode de réalisation précédent, chaque sous-réseau est configuré de façon à être activé ou désactivé indépendamment des autres sous-réseaux.

L'invention a également pour objet un dispositif de détection et de caractérisation d'émissions radioélectriques, adapté à la réception et à la caractérisation d'émissions radioélectriques de fréquence centrale $F_0$ comprise dans une bande de fréquences BH. Selon l'invention ce dispositif comporte au moins :

- un dispositif de réception large bande selon l'invention utilisé pour produire deux signaux $I1_{FI}$ et $Q2_{FI}$ en fréquence intermédiaire ;
- une chaîne de traitement comportant elle-même :
- des moyens de numérisation réalisant la conversion analogique-numérique des signaux I1FI et Q2FI ;
- des premiers moyens de traitement dont la fonction est d'effectuer, en sortie du dispositif de réception, après numérisation, un filtrage adapté des signaux $I1_{FI}$ et $Q2_{FI}$ numérisés ;
- des deuxièmes moyens de traitement dont la fonction est de réaliser d'une part la détection d'une émission par comparaison du niveau de signal reçu à un seuil de détection donné et d'autre part la mesure de la durée et de la période de répétition du signal reçu à partir de son enveloppe ;
- des troisièmes moyens de traitement dont la fonction est de réaliser, en parallèle du traitement réalisé par les deuxièmes moyens, à partir des signaux FI $I1_{FI}$ et $Q2_{FI}$ et après échantillonnage et numérisation, une mesure de la fréquence de l'émission détectée ainsi qu'une mesure de gisement localisant la source de l'émission, cette fonction étant réalisée par mesure interférométrique entre les deux voies de réception $I1_{FI}$ et $Q2_{FI}$ après filtrage adapté.

Selon un mode de réalisation de ce dispositif, les sorties $I1_{FI}$ et $Q2_{FI}$ du dispositif de réception sont connectées après numérisation à l'entrée d'un filtre adapté à la durée de l'impulsion attendue la plus courte.

Selon un autre mode de réalisation de ce dispositif, les sorties $I1_{FI}$ et $Q2_{FI}$ du dispositif de réception sont connectées après numérisation à l'entrée d'un filtre adapté au code de modulation attendu le plus court.

Selon un autre mode de réalisation de ce dispositif, les deuxièmes moyens de traitement réalisent une détection quadratique du signal délivré par les filtres adaptés.

Selon un autre mode de réalisation de ce dispositif, les deuxièmes moyens de traitement réalisent une autocorrélation d'enveloppe effectuée sur le signal obtenu par détection quadratique.

Selon un autre mode de réalisation de ce dispositif, la détection d'une émission est effectuée par comparaison à un seuil du signal reçu, après détection quadratique.

Selon un autre mode de réalisation de ce dispositif, la détection d'une émission est effectuée par comparaison à un seuil du signal reçu après détection quadratique et autocorrélation d'enveloppe.

Le dispositif selon l'invention permet avantageusement de traiter une très large bande de fréquences avec une sensibilité élevée, en utilisant des moyens simples et peu onéreux.

Il permet également de réaliser la détection de signaux à émission continue ou à facteur de forme élevé, émis avec des niveaux de puissance extrêmement faibles.

Par ailleurs, associé à des moyens de traitement linéaire conservant la phase du signal capté, le dispositif selon l'invention permet avantageusement de constituer un dispositif plus important, permettant de mesurer la fréquence du signal émis ainsi que la position angulaire de la source avec une très bonne précision.

Les caractéristiques et avantages de l'invention seront mieux appréciés grâce à la description qui suit, description qui s'appuie sur les figures annexées qui représentent :

- les figures 1 et 2, des illustrations relatives à l'art antérieur ;
- la figure 3, une représentation schématique de principe de la structure de l'antenne du dispositif selon l'invention ;
- la figure 4, une représentation schématique d'un premier mode de réalisation particulier de l'antenne du dispositif selon l'invention, l'antenne présentant deux faces rayonnantes ;
- la figure 5, une représentation schématique d'un autre mode de réalisation particulier de l'antenne du dispositif selon l'invention, l'antenne présentant trois faces rayonnantes ;
- la figure 6, une illustration schématique du principe de formation des voies de réception dans une forme de réalisation préférée du dispositif selon l'invention ;
- la figure 7, une illustration schématique du dispositif de réception selon l'invention ;
- la figure 8, une illustration schématique du principe d'une chaine de traitement numérique associée au dispositif selon l'invention ;
- les figures 9 et 10, des illustrations relatives à deux modes de réalisation particuliers de l'antenne du dispositif selon l'invention, pris comme exemples.

La texte qui suit décrit les différentes caractéristiques du dispositif selon l'invention ainsi qu'un application de ce dispositif à la réalisation d'un système assurant la détection d'émissions et la caractérisation des ondes constituant les émissions détectées, ainsi que la localisation de la source des émissions détectées.

Le dispositif selon l'invention, comporte, en une combinaison, plusieurs moyens qui coopèrent pour résoudre le problème posé, à savoir :

- Au moins deux antennes identiques, à grand gain, directives dans au moins un plan, en gisement par exemple. Ces antennes sont agencées pour recevoir simultanément les signaux provenant d'un même émetteur distant ;
- des moyens formant une chaîne de réception large bande des signaux captés par les antennes, signaux dont la fréquence centrale comprise dans une bande BH donnée, est inconnue a priori. Ces moyens sont configurés de façon à démoduler le signal S1 capté par la première antenne par le signal S2 capté par la seconde antenne, après transposition en fréquence et à démoduler le signal S2 capté par la seconde antenne par le signal S1 capté par la première antenne, après transposition en fréquence. Les signaux démodulés sont ensuite transposés en fréquence intermédiaire.

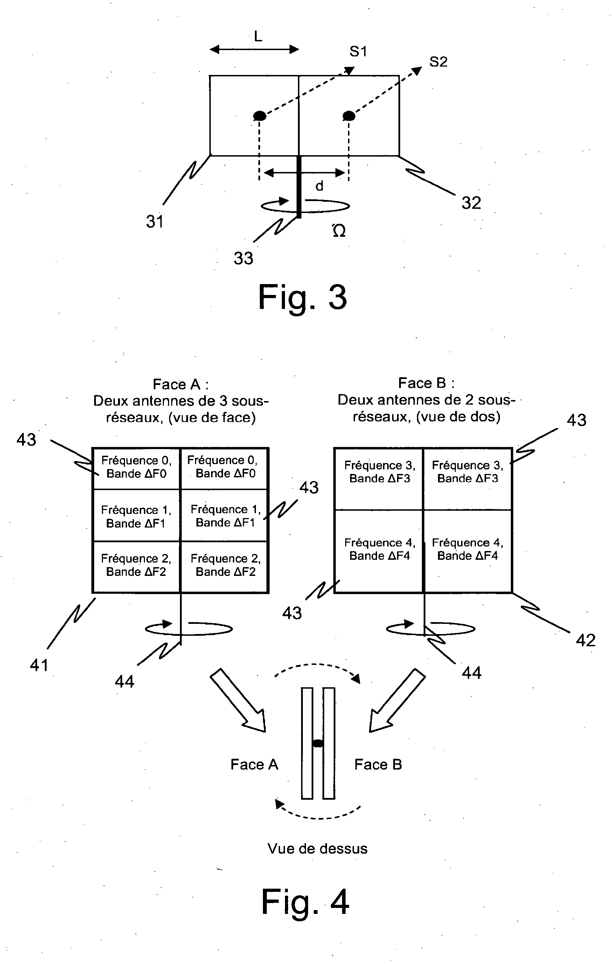

Le dispositif de réception selon l'invention comporte ainsi, en premier lieu, une base d'interférométrie constituée, comme l'illustre le schéma de principe de la figure 3, d'au moins deux antennes directives identiques 31 et 32. Afin d'obtenir une sélectivité élevée, le dispositif selon l'invention associe des antennes de grande directivité dans au moins un plan, à une chaîne de réception réalisant une autocorrélation du signal reçu.

Dans un mode de réalisation préféré, correspondant à l'agencement de la figure 3, les deux antennes 31 et 32 sont des antennes planes placées de manière contiguë dans un même plan, et agencées de façon à ce que leurs axes de visée soient parallèles et dirigés dans le même sens. Cette configuration correspond à celle, bien connue, d'une antenne monopulse de phase.

Cependant, selon la variante de réalisation considérée, ces antennes peuvent être agencées, dans une configuration connue d'antenne monopulse d'amplitude, de façon à présenter des centres de phase situés au même endroit, et à pointer dans des directions non parallèles, distinctes l'une de l'autre d'un angle a égal à une portion de leur ouverture angulaire. Un tel agencement est par exemple réalisable avec une source multimodes placée au foyer d'un réflecteur parabolique.

Alternativement encore, les antennes peuvent aussi être agencées de façon à être séparées l'une de l'autre (antennes non adjacentes) et viser dans la même direction, ce qui correspond à une configuration d'interféromètre ambigu.

Alternativement encore, les antennes peuvent aussi être agencées de façon à être séparées l'une de l'autre (antennes non adjacentes) et viser dans des directions décalées l'une par rapport à l'autre d'un angle correspondant à une portion de l'ouverture angulaire.

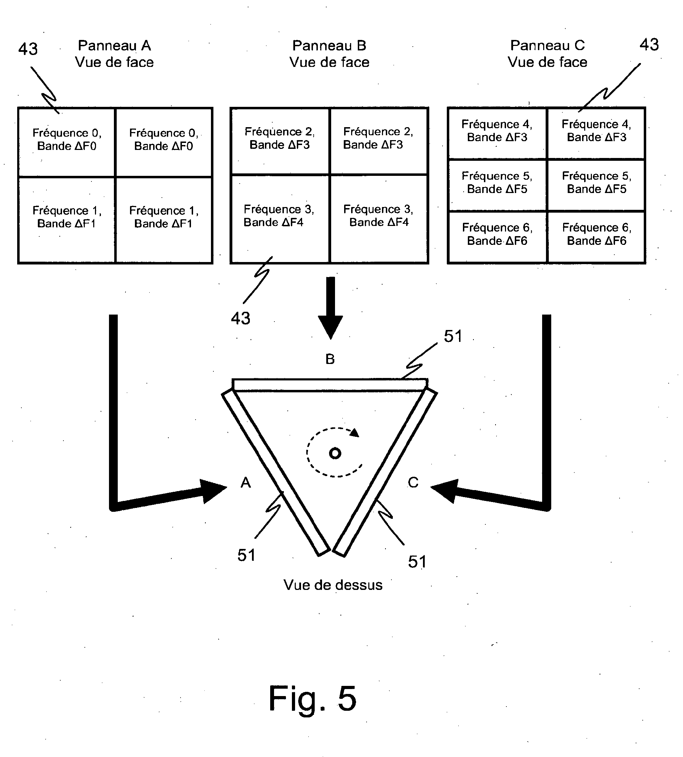

Alternativement enfin, la couverture angulaire peut également être obtenue en associant une pluralité d'antennes identiques 51, disposées sur les faces d'un prisme à base polygonale, tournant autour de son axe de symétrie vertical, comme illustré schématiquement par la figure 5.

Selon une forme de réalisation préférée, comme l'illustrent notamment les figures 4 et 5, chacune des deux antennes 41, 42 est constituée de plusieurs sous-réseaux 43 affectés chacun à une sous-bande particulière de la bande de fréquences totale BH des émissions que l'on cherche à détecter. Chaque sous-réseau est ainsi configuré pour recevoir les signaux dans une partie limitée de la bande BH. Une telle configuration permet avantageusement de désactiver, si nécessaire, certains des sous-réseaux pour éviter la perturbation causée par des signaux jugés indésirables.

Selon l'invention, les sous-réseaux sont répartis dans un plan vertical, juxtaposés de part et d'autre d'un axe de symétrie vertical, de telle sorte que leurs diagrammes de rayonnement soient dirigés du même côté du plan. Chacune des antennes présente ainsi, comme l'illustre la figure 3, un seul plan rayonnant.

Alternativement, dans une configuration dos-à-dos, les sous-réseaux 43 peuvent être placés dans un plan vertical, avec une moitié des sous-réseaux ayant un diagramme de rayonnement dirigé d'un côté du plan et l'autre moitié ayant un diagramme dirigé du côté opposé. Dans ce cas, chacune des antennes présente, comme l'illustre la figure 4, deux faces rayonnantes dos-à-dos. Une telle configuration permet avantageusement de diminuer la hauteur de l'ensemble.

Alternativement encore, des configurations géométriques plus complexes d'agencement des sous-réseaux 43, telles que celle illustrée par la figure 5 peuvent être mises en oeuvre pour des applications particulières.

Selon un mode de réalisation préféré de l'invention, mode de réalisation qui correspond au cas le plus général, les antennes sont mobiles autour d'un axe de rotation de façon à couvrir un domaine angulaire inférieur ou égal à 360° en gisement, par balayage mécanique. L'antenne permet ainsi avantageusement d'assurer une veille sur un large secteur angulaire dans le plan horizontal (ou plan gisement).

Par ailleurs, en fonction de l'application envisagée, les antennes peuvent être actionnées de façon à adopter un mouvement de rotation continue, selon un sens de rotation constant, ou bien de façon alternée, dans un sens de rotation donné puis dans le sens inverse.

Ainsi, par exemple, pour une bande d'analyse BH comprise entre 8 et 18GHz, le dispositif selon l'invention peut comporter deux antennes constituées chacune de quatre sous-réseaux selon la répartition en fréquence suivante :

- sous-réseau 1 : fréquence centrale Fo=9GHz, AF0=2GHz;
- sous-réseau 2 : fréquence centrale F1=11,125GHz, AF1 =2,25GHz;
- sous-réseau 3 : fréquence centrale F2=13,625GHz, AF2=2,75GHz;
- sous-réseau 4 : fréquence centrale F3=16,5GHz, AF3=3GHz.

D'un point de vue réalisation, les différents sous-réseaux constituant l'antenne peuvent être réalisés de différentes façons connues. Afin de limiter les coûts de réalisation, ces sous-réseaux peuvent avantageusement être réalisés en technologie de circuit imprimé.

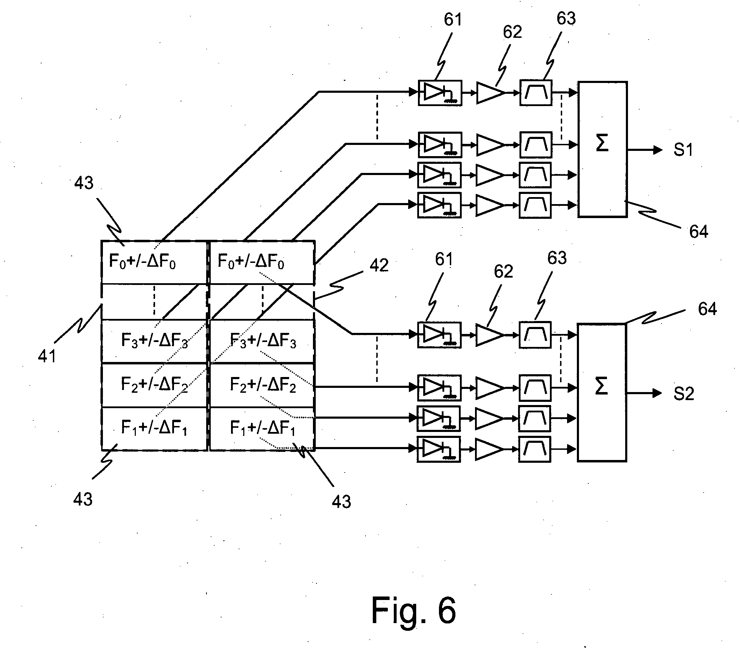

D'un point de vue fonctionnel, selon un mode de réalisation préféré du dispositif selon l'invention, chaque sous-réseau 43 dispose, comme l'illustre la figure 6, d'une sortie qui lui est propre, et qui est connectée à un dispositif de sortie comportant des circuits spécifiques de limitation 61, d'amplification à faible bruit 62, et de filtrage 63.

Par suite, après amplification et filtrage en radiofréquence, les sorties des différents sous-réseaux de chaque antenne sont sommés 64, de sorte qu'après regroupement des voies, chacune des antennes ne comprend plus qu'une seule voie de réception fournissant un signal S1 ou S2.

Alternativement, dans une variante de réalisation plus restreinte, la sommation des voies correspondant aux différents sous-réseaux peut être réalisée avant amplification.

Dans une forme de réalisation préférée le dispositif de sortie de chacun des sous-réseaux est configuré de façon à rendre possible l'activation d'une partie des sous-réseaux, voire d'un seul sous-réseau. On peut ainsi avantageusement augmenter la capacité de discrimination et la sensibilité du dispositif dans une sous-bande donnée en limitant le bruit dans la puissance de bruit reçue par le récepteur et éventuellement en éliminant des signaux non désirés. Ceci peut se faire simplement en prévoyant des moyens pour couper l'alimentation des circuits d'amplification faible bruit (LNA) 62, à l'aide d'un commutateur à diode par exemple.

Le dispositif de réception selon l'invention comporte en second lieu des moyens formant une chaîne de réception large bande des signaux captés par les antennes. Comme cela a été dit précédemment, ces signaux ont un spectre centré sur une fréquence centrale $F_0$ inconnue a priori, comprise dans la bande BH considérée. Ces moyens ont pour fonction de démoduler l'un par l'autre le signal S1 reçu par une des antennes constituant la base d'interférométrie et le signal S2 reçu par l'autre antenne, ce qui revient à réaliser une autotransposition du signal reçu.

Selon l'invention, la démodulation est préférentiellement réalisée par formation de signaux transposés en fréquence à partir des signaux captés S1 et S2, et mélange des signaux transposés en fréquence, les signaux reçus S1 et S2 étant transposés autour de fréquences différentes, de façon à ce que le battement entre les deux signaux transposés génère un signal centré sur une fréquence intermédiaire FI prédéfinie. Cette double transposition en fréquence permet avantageusement de garantir une sensibilité optimale du récepteur du dispositif selon l'invention vis-à-vis du bruit, et de s'affranchir des tensions continues de décalage (offsets) qui pourraient limiter la dynamique de réception.

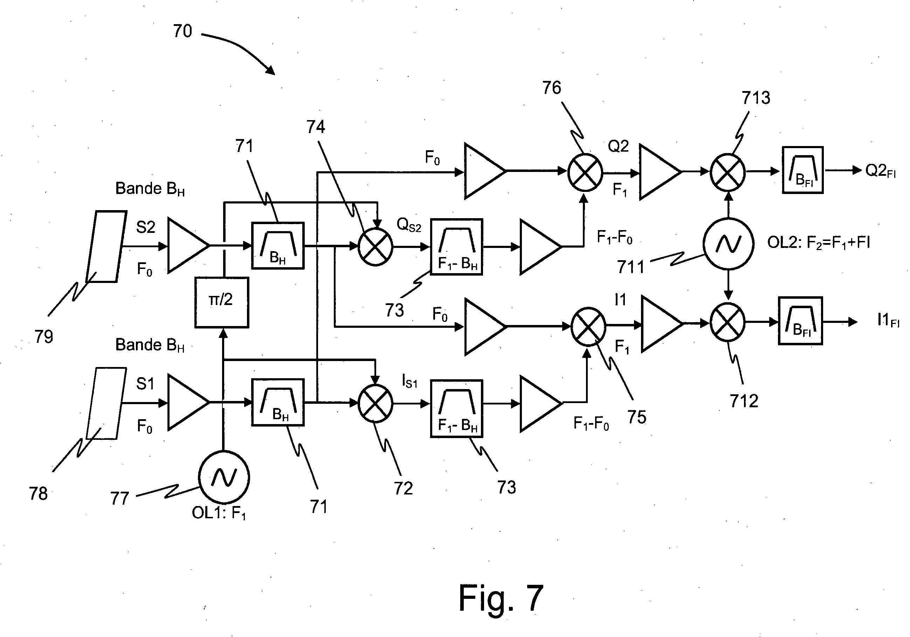

La figure 7 présente de façon schématique, à titre d'exemple, un mode de réalisation préféré du dispositif selon l'invention. Le schéma de la figure 7 détaille principalement les différents éléments composant principalement la chaîne de réception permettant de réaliser l'autotransposition du signal reçu.

Selon ce mode de réalisation, l'autotransposition consiste en une démodulation amplitude-phase. Le signal en fréquence intermédiaire produit est un signal complexe comportant deux composantes en quadrature de phase un signal $I1_{FI}$ (composante réelle) réel et un signal $Q2_{FI}$ (composante imaginaire). Les deux signaux $I1_{FI}$ et $Q2_{FI}$ sont produit par deux chaînes analogues séparées.

A cet effet, la fonction d'autotransposition est par exemple formée de deux voies identiques déphasées de $\pi/2$ l'une par rapport l'autre, les signaux radioélectriques S1 et S2 étant mélangés, en sortie du récepteur hyperfréquence, à deux signaux de référence en quadrature de phase produits par un premier oscillateur local 77 de fréquence F1.

Ainsi, après amplification et filtrage passe-bande 71, le signal radioélectrique S1 reçu par la première antenne, de fréquence $F_0$ inconnue, est démodulé dans premier étage mélangeur 72 par un premier oscillateur local 77 de fréquence $F_1$ pour donner naissance, après filtrage passe-bande 73 et éventuellement amplification, à un signal $I_{S1}$ de fréquence $F_1$-$F_0$.

De façon analogue, la seconde antenne reçoit un signal radio S2 de fréquence $F_0$ identique à la fréquence du signal S1, mais déphasé par rapport à celui-ci d'un déphasage $\Delta\Phi$ qui est fonction de la direction angulaire $\theta$ d'arrivée du signal. Ce déphasage est donné par la relation suivante :

$$\Delta\Phi = 2\pi \cdot d \cdot F_0 \cdot \sin(\theta)/c,$$

où c représente la vitesse de la lumière et d la distance entre les centres de phases des deux antennes.

Après amplification et filtrage passe-bande 71, le signal S2 est, de façon analogue au signal S1, démodulé dans un premier étage mélangeur 74 par l'oscillateur local 77 à la fréquence $F_1$, déphasé de $\pi/2$, pour donner naissance après filtrage passe-bande 73 et éventuellement amplification, à un signal $Q_{S2}$ de fréquence $F_1$-$F_0$.

Après une première transposition 72, le signal $I_{S1}$, de fréquence $F_1$-$F_0$, est démodulé par le signal S2 de fréquence $F_0$ dans un deuxième étage mélangeur 75 pour donner lieu, éventuellement après filtrage, au signal I1 de fréquence $F_1$.

De manière analogue, après une première transposition 74, le signal $Q_{S2}$, de fréquence $F_1$-$F_0$, est démodulé par le signal S1 de fréquence $F_0$ dans un deuxième étage mélangeur 76 pour donner lieu, éventuellement après filtrage, au signal Q2 de fréquence $F_1$.

Il est à noter que ce deuxième étage mélangeur 75 ou 76 effectue une transposition en fréquence vers les fréquences plus élevées, de façon que la différence de phase $\Delta\Phi$ entre les signaux S1 et S2 génère une différence de phase $2\Delta\Phi$-$\pi/2$ entre les signaux I1 et Q2 en sortie des mélangeurs 75 et 76. Cette transposition en fréquence vers le haut est une condition indispensable pour ne pas éliminer la différence de phase $\Delta\Phi$ dans le dispositif.

Les signaux I1 et Q2 sont ensuite eux-mêmes démodulés dans un troisième étage mélangeur 712, 713 par un deuxième oscillateur local 711, de fréquence $F=F_2$+FI, pour produire deux signaux $I1_{FI}$ et $Q2_{FI}$, centrés sur la fréquence FI.

Les deux signaux $I1_{FI}$ et $Q2_{FI}$ ainsi produits sont déphasés entre eux de $4\cdot\pi\cdot d\cdot F_0\cdot\sin(\theta)/c$- $\pi/2$, $\theta$ étant un angle fonction de la direction d'arrivée du signal et des directions $\theta_1$ et $\theta_2$ de pointage des antennes.

Il est à noter que pour obtenir un fonctionnement satisfaisant du dispositif de réception selon l'invention, la partie hyperfréquence du dispositif selon l'invention, constituée des éléments en amont du premier étage mélangeur notamment, présente les caractéristiques techniques suivantes

- les antennes 78 et 79 utilisées ont un gain important, typiquement de 20 à 30dB, de façon à ce que le rapport signal-à-bruit soit suffisant en entrée d'autotransposition. Un tel gain est par exemple possible avec des antennes constituées de sous-réseaux à bandes limitées, juxtaposés ;
- la bande de réception de chacun des sous-réseaux antennaires est limitée par filtrage, de façon à éviter de recevoir des signaux au-dehors de la bande utile pour laquelle il n'est pas adapté ;
- les signaux S1 et S2 produits par les deux antennes sont amplifiés avec un gain suffisant pour que le niveau d'injection du signal hyperfréquence considéré, S1 ou S2, sur les entrées "oscillateur local" des étages mélangeurs 75 et 76 permette la saturation des diodes de mélange constituant les mélangeurs et ce, quel que soit le niveau du signal utile S1, ou S2 en entrée du récepteur. Typiquement, ce niveau est de l'ordre de 10dBm. En pratique, le gain d'amplification hyperfréquence est défini pour qu'en présence du seul bruit, le niveau de saturation des étages mélangeurs soit atteint. On utilisera pour ce faire, par exemple, un amplificateur limité pour alimenter l'entrée OL (i.e. Oscillateur Local) des mélangeurs ;

- la fréquence de l'oscillateur local de l'étage de transposition en fréquence intermédiaire FI est choisie de façon à être supérieure à la valeur de la bande de réception hyperfréquence BH, de façon à éviter le repliement du bruit dans cette bande. Ainsi, à titre d'exemple, pour une bande de réception BH comprise entre 8 et 18GHz, on pourra choisir $F_1$=22GHz et F2=24GHz;
- l'autotransposition effectuée, au niveau des étages mélangeurs 75 et 76, pour assurer l'autodémodulation complexe du signal reçu est réalisée en sélectionnant par filtrage, en sortie de ces mélangeurs le signal correspondant à la conversion en fréquence vers le haut (F1).

Le fonctionnement du dispositif de réception selon l'invention est ainsi basé sur l'autotransposition et l'autocorrélation des signaux captés de façon synchrone par au moins deux antennes directives, signaux issus d'une même source d'émission qui éclaire simultanément les deux antennes. Par suite tous les signaux reçus se trouvent avantageusement transposés autour d'une même fréquence dans un même récepteur à bande étroite, quelle que soit leur fréquence d'origine.

Avantageusement, ce récepteur est ainsi, par principe, autoadapté à la détection des signaux reçus, quelles que soient leurs caractéristiques de forme d'onde et de fréquence, et les performances obtenues se rapprochent de celles que l'on obtient dans un récepteur radar idéal.

En ce qui concerne l'antenne utilisée par le dispositif selon l'invention, il est à noter que l'ensemble du dispositif antennaire peut également, quand les circonstances le permettent, être placée à l'arrière d'une antenne radar existante, prenant avantage du mécanisme de rotation de celle-ci.

De manière analogue, l'ensemble des circuits électroniques constituant le dispositif selon l'invention peut être placé en position tournante, solidaire du panneau rayonnant.

Il est par ailleurs à noter que, dans le cas où le dispositif selon l'invention est associé à un radar longue portée comportant une antenne de type "dalle", le dispositif selon l'invention peut être installé à l'arrière de la dalle radar. De cette façon, il est possible de disposer des surfaces antennaires tournantes de grandes dimensions permettant des gains d'antenne importants et donc une grande sensibilité. Une détection de signaux de puissance très faible est donc ainsi possible, ce qui peut permettre d'améliorer la portée.

Des solutions à antennes conformes sont également possibles.

Il est à noter enfin que, bien que l'ensemble du dispositif selon l'invention ait été décrit dans le texte qui précède comme étant destiné à traiter les émissions reçues en formant deux signaux $I1_{FI}$ et $Q2_{FI}$ en fréquence intermédiaire, en quadrature de phase l'un par rapport à l'autre, il est bien sur possible de concevoir un dispositif simplifié configuré pour ne former et ne traiter qu'une seule voie, la voie $I1_{FI}$ par exemple. Toutefois, dans le cas particulier où une seule voie est utilisée pour ne produire qu'un seul signal en fréquence intermédiaire $I1_{FI}$ (ou $Q2_{FI}$), le bon fonctionnement du dispositif implique que les deux oscillateurs locaux, à $F_1$ et $F2=F_1+FI$, doivent être cohérents en phase.

Une telle simplification se traduit avantageusement par une division par 2 du nombre de circuits électroniques nécessaires. En revanche elle se traduit également par une perte de sensibilité de 3dB.

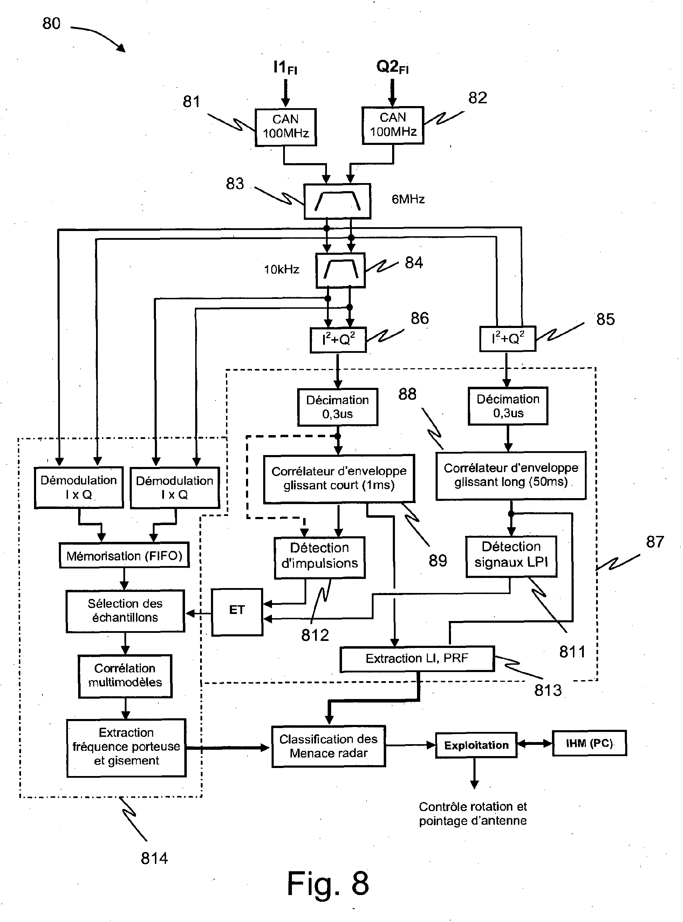

Le dispositif de réception selon l'invention tel qu'il est décrit dans le texte qui précède peut évidemment être mis en oeuvre dans différents types d'applications. Dans la suite de la description on présente, à titre d'exemple non limitatif, une application dans laquelle le dispositif selon l'invention est associé à des moyens de traitement pour former un dispositif plus vaste permettant de détecter des émissions effectuées par une source non connue ainsi que de caractériser ces émissions et d'en localiser la source. Le schéma fonctionnel du dispositif est représenté par la juxtaposition des schémas des figures 6 et 7, les sorties $I1_{FI}$ et $Q2_{FI}$ du dispositif de détection selon l'invention représenté sur la figure 7 étant reliées aux entrées $I1_{FI}$ et $Q2_{FI}$ des moyens représentés sur la figure 8.

A cet effet, le dispositif de détection et de caractérisation d'émissions radioélectriques considéré associe le dispositif de réception large bande 70 selon l'invention à une chaîne de traitement 80, illustrés par la figure 8, comportant les moyens suivants :

- des moyens de numérisation 81, 82 pour numériser les signaux $I1_{FI}$ et $Q2_{FI}$ produits par le dispositif de réception selon l'invention ;
- des premiers moyens de traitement numérique réalisant un filtrage des signaux numérisés par un filtre adapté à la forme du signal attendu. Ce filtre peut, selon le type de modulation de l'onde émise, être adapté à la durée de l'impulsion la plus courte attendue ou encore à la durée de modulation la plus courte.

Il est à noter que, dans le cas où on s'intéresse à des signaux de natures diverses, il est possible de mettre en oeuvre en parallèle, comme l'illustre la figure 8, plusieurs filtres 83, 84 ayant des bandes passantes différentes :

- des deuxièmes moyens de traitement 87 dont la fonction est de réaliser d'une part la détection d'une émission et d'autre part la mesure de la durée et de la période de répétition du signal correspondant ;

- des troisièmes moyens de traitement 811 dont la fonction est de réaliser en parallèle du traitement de détection 87, la mesure de la fréquence de l'émission radioélectrique captée et la détermination du gisement de la source à l'origine de l'émission détectée.

Les premiers moyens de traitement ont pour fonction de réaliser, en sortie du dispositif de réception, un étage de filtrage 83 adapté à l'impulsion la plus courte attendue dans le cas d'une émission pulsée, ou un étage 84 adapté à la durée du code de modulation le plus court attendu dans le cas d'une émission LPI. L'étage de filtrage ainsi mis en oeuvre permet avantageusement d'optimiser la sensibilité du dispositif.

Dans une forme de réalisation particulière le dispositif de détection d'émissions considéré cascade deux étages de filtrage, par exemple, un premier étage 83 de largeur de bande Bv=6MHz adapté à des impulsions de largeurs minimale de l'ordre de $0,3\mu s$, et un second étage 84 de largeur de bande Bv=10kHz, adapté à des signaux codés, le code le plus court attendu ayant une durée de $100\mu s$.

De façon préférentielle, comme illustré par la figure 8, le filtrage appliqué est réalisé sous forme numérique, après échantillonnage et codage 81, 82 des signaux $I1_{FI}$ et $Q2_{FI}$ délivrés par le dispositif de réception selon l'invention illustrée par la figure 7. Le filtrage des signaux sous forme numérique permet avantageusement d'adapter facilement la bande passante du filtre (ou des filtres) aux signaux considérés, en fonction du contexte, ou de générer plusieurs filtres de caractéristiques différentes en parallèle, les signaux obtenus correspondant à autant de formes d'onde différentes, traitées séparément.

Les deuxièmes moyens de traitement 87 ont pour fonction de réaliser d'une part la détection d'une émission et d'autre part la mesure de la durée et de la période de répétition de cette émission modulée par impulsion, ces mesures étant réalisées sur l'enveloppe du signal. Le signal reçu est ici représenté par le carré de son module après détection quadratique 85 ou 86.

L'enveloppe du signal est elle-même obtenue par application d'une détection quadratique 85, 86, sur les sorties du filtre adapté 83, 84 (ou des filtres adaptés) et détermination, par corrélation glissante.

Selon le type de l'émission considérée, la détection de l'émission est réalisée, comme l'illustre la figure 8, soit sur le module du signal obtenu après détection quadratique 85, 86, soit sur l'enveloppe de ce signal obtenue après application d'un traitement préalable d'autocorrélation 88, 89 à ce signal. Réaliser la détection d'une émission sur l'enveloppe du signal permet avantageusement de renforcer la sensibilité de détection, principalement pour les signaux provenant d'émissions LPI, et, dans tous les cas, d'augmenter la sélectivité temporelle du traitement et d'estimer la durée et la période de récurrence des impulsions. La fonction de corrélation appliquée au signal a, de manière classique, pour

expression :

$$C(k) = \sum_{i=1}^{N} x(i)x(i+k)$$

Où, de manière connue, x représente ici le signal, i son indice temporel et k l'indice du retard considéré.

Les troisièmes moyens de traitement 814 ont pour fonction de réaliser en parallèle du traitement de détection, à partir des signaux FI, I1 $_{FI}$ et Q2$_{FI}$, et après échantillonnage et numérisation, une mesure du gisement et de la fréquence centrale F$_0$ du signal radioélectrique capté. Ces mesures sont réalisées par interférométrie entre les deux voies de réception I1 $_{FI}$ et Q2$_{FI}$ après filtrage adapté, conformément, par exemple, au procédé décrit dans la demande de brevet français N°1100337 déposée par la demanderesse le 03/02/2011, comme illustré sur la figure 8. Selon l'invention, cette mesure est effectuée à chaque détection d'impulsion et est déclenchée par le traitement de détection 87.

Les différentes informations produites par le dispositif de détection et de caractérisation d'émissions, aussi bien par les deuxièmes moyens de traitement (détections) que par les troisièmes moyens de traitement (mesure de fréquence et localisation en gisement) sont destinées à être transmises à des moyens d'exploitation, de classification des émissions détectées, qui peuvent eux-mêmes les transmettre après conditionnement à une interface homme-machine dont le rôle est de présenter à un opérateur les caractéristiques globales des émissions détectées, par exemple : la durée d'impulsion, la période de répétition, la fréquence F$_0$ de l'émission, et la position angulaire de la source (liste non limitative).

Il est à noter que les caractéristiques principales des différents éléments composant le dispositif de réception selon l'invention (cf. figure 7) et de ceux composant les moyens de traitement associés (cf. figure 8) sont déterminées par les émissions que l'on cherche à détecter. Ainsi, par exemple, si l'on cherche à réaliser un dispositif permettant de détecter des émissions dans une gamme de fréquences comprise entre 2 et 18GHz on peut, par exemple, mettre en oeuvre un dispositif de détection, conforme à la figure 7, présentant en particulier les caractéristiques techniques suivantes :

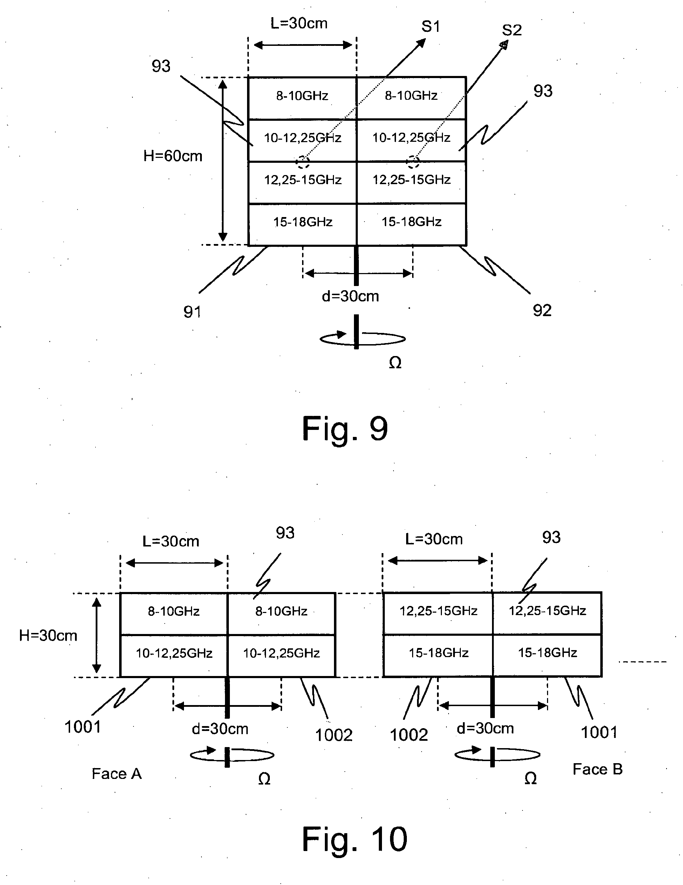

- Utilisation d'une antenne de type monopulse de phase à grand gain, typiquement 20dB, placée sur un axe de rotation. Une telle antenne peut par exemple, comme illustré par la figure 9 comporter deux panneaux 91 et 92, juxtaposés dans un même plan, définissant deux voies de réception S1 et S2. Chaque panneau est constitué de quatre sous-réseaux 93, chacun des sous-réseaux couvrant une partie de la bande de réception totale (2-18GHz) selon la répartition fréquentielle et les dimensions typiques présentées figure 9 par exemple. Après filtrage, limitation et amplification, les sorties des différents sous-réseaux 93 de chacune des antennes 91 ou 92 sont sommées, donnant une voie hyperfréquence unique par antenne. Alternativement, les deux antennes 1001 et 1002 peuvent être constituées de sous-réseaux 93 regroupés par 2 et placés sur deux panneaux placés dos-à-dos afin de réduire la hauteur de l'ensemble, comme représenté figure 10;

- Utilisation pour la réception de deux oscillateurs de référence dont les fréquences sont respectivement égales à F1= 24GHz et F2=22GHz. En sortie du récepteur, on dispose de deux voies démodulées I1$_{FI}$ et Q2$_{FI}$, déphasées l'une par rapport à l'autre, dont la fréquence centrale est égale à 2GHz (différence de fréquence entre les deux oscillateurs locaux de référence utilisés) et dont la bande passante est par ailleurs limitée par filtrage, à 50MHz par exemple.

Ce dispositif de détection peut en outre être associé à des moyens de numérisation, de filtrage adapté et de traitement numérique, conformes à la figure 8, présentant en particulier les caractéristiques techniques suivantes :

- les signaux FI obtenus, I1$_{FI}$ et Q2$_{FI}$, sont numérisés, par des convertisseurs analogique-numérique 81 et 82, avec une fréquence d'échantillonnage de 100MHz par exemple ;
- les signaux numérisés sont filtrés par deux filtres 83 et 84 de bande passante correspondant respectivement à la largeur de bande de l'impulsion attendue la plus courte, et au code de phase ou de fréquence attendu le plus court pour les émissions LPI, des bandes respectivement égales à 6MHz et 10kHz par exemple ;
- A la sortie de ces filtres, les traitements de détection d'émissions pulsées et celles d'émissions continues, de type LPI par exemple, sont effectués suivant des principes semblables, avec des réglages différents, adaptés à chacune des configurations :
- Détection quadratique I$^2$+Q$^2$ : 85, 86 ;
- Décimation, typiquement sur 0,3$\mu$s ;
- Corrélation d'enveloppe, typiquement sur un temps de 1 ms sur la voie impulsion, et sur 50ms sur la voie LPI : 88 et 89 ;
- Détection par comparaison à un seuil adapté : 811 et 812 ;
- Estimation 813 des durées d'impulsion et des périodes de répétition.

Il est à noter que de manière analogue à ce qui se passe pour le dispositif de réception selon l'invention, l'ensemble des circuits électroniques constituant les moyens de traitement peut être placé, quand cela est possible, en position tournante, solidaire du panneau rayonnant. Alternativement, il est également possible de séparer le dispositif de détection d'émissions en deux éléments, un sous-ensemble constitué par le dispositif de réception selon l'invention (cf. figure 7) solidaire de l'antenne en rotation, et un sous-ensemble constitué par les moyens de numérisation et de traitement numérique (cf. figure 8) déporté en partie fixe. Dans ce dernier cas, le transfert des signaux entre les deux sous-ensembles peut être réalisé à l'aide d'un joint tournant, éventuellement en technologie optique.

## Revendications

1. Dispositif de réception large bande (70), adapté à la réception d'émissions radioélectriques de fréquence centrale $F_0$ comprise dans une bande de fréquences BH, ledit dispositif comportant au moins :

    - deux antennes identiques (78, 79) très large bande à grand gain, directives dans au moins un plan, les deux antennes étant pointées sensiblement dans la même direction, chacune des antennes produisant à partir des émissions captées un signal radioélectrique S1 ou S2 ;
    - une chaîne de réception comportant deux oscillateurs locaux cohérents en phase, de fréquences respectives F1 et F2=F1+FI supérieures à la fréquence maximale de la bande BH, ladite chaîne de réception réalisant la démodulation des signaux radioélectriques S1 et S2 en un signal en fréquence intermédiaire FI ;

    **caractérisé en ce que** le signal en fréquence intermédiaire est obtenu en deux étapes :

    - en démodulant d'abord le signal S1 ou le signal S2 par un signal respectivement obtenu par transposition en fréquence de l'autre signal, le signal S2 ou S1 respectivement, au moyen de l'oscillateur local de fréquence F1 et en sélectionnant la bande latérale inférieure du spectre obtenu ; le signal démodulé obtenu étant quant à lui filtré de façon à ne conserver que la bande latérale supérieure du spectre obtenu après démodulation ;
    - en transposant ensuite en fréquence intermédiaire, FI, le signal obtenu par démodulation du signal S1 ou S2 au moyen de l'oscillateur local de fréquence F2= F1 +FI ;

    le signal en fréquence intermédiaire produit étant centré sur une fréquence intermédiaire FI constante quelle que soit la fréquence centrale $F_0$ des signaux reçus.

2. Dispositif de réception large bande (70) adapté à la réception d'émissions radioélectriques de fréquence centrale $F_0$ comprise dans une bande de fréquences BH, ledit dispositif comportant au moins :

    - deux antennes identiques (78, 79) très large bande à grand gain, directives dans au moins un plan, les deux antennes étant pointées sensiblement dans la même direction, chacune des antennes produisant à partir des émissions captées un signal radioélectrique S1 ou S2 ;
    - une chaîne de réception comportant deux oscillateurs locaux, de fréquences respectives F1 et F2=F1+FI supérieures à la fréquence maximale de la bande BH, ladite chaîne de réception réalisant la démodulation des signaux radioélectriques S1 et S2 en deux signaux en fréquence intermédiaire $I1_{FI}$ et $Q2_{FI}$ ;

    **caractérisé en ce que** les deux signaux en fréquence intermédiaire $I1_{FI}$ et $Q2_{FI}$ sont obtenus en deux étapes :

    - en démodulant d'abord chacun des deux signaux S1 ou S2 par un signal, $Q_{S2}$ ou $I_{SI}$ respectivement, obtenu par transposition en fréquence (72, 74) de l'autre signal, le signal S2 ou S1 respectivement, au moyen d'un signal de fréquence F1. respectivement en quadrature de phase ou en phase avec l'oscillateur local (77) de fréquence F1 et en sélectionnant la bande latérale inférieure du spectre obtenu (73) ; les signaux démodulés I1 et Q2 obtenus étant quant à eux filtrés de façon à ne conserver que la bande latérale supérieure du spectre obtenu après démodulation ;
    - en transposant ensuite en fréquence intermédiaire, FI, les signaux 11 et Q2 obtenus par démodulation des signaux S1 et S2 (712, 713) au moyen de l'oscillateur local (711) de fréquence F2= F1 +FI ;

    les signaux en fréquence intermédiaire $I1_{FI}$ et $Q2_{FI}$ produits étant centrés sur une fréquence intermédiaire FI constante quelle que soit la fréquence centrale $F_0$ des signaux reçus.

3. Dispositif selon l'une des revendications 1 ou 2, **caractérisé en ce que** les antennes (78, 79) sont des antennes contiguës agencées selon une configuration monopulse de phase, de telle façon que leurs axes de visée soient dirigés dans la même direction.

4. Dispositif selon l'une des revendications 1 ou 2, **caractérisé en ce que** les antennes (78, 79) sont agencées, selon une configuration d'antenne monopulse d'amplitude, de telle façon que leurs centres de phase soient situés au même endroit, et qu'elles pointent dans des directions non parallèles, distinctes l'une de l'autre d'un angle $\alpha$ égal à une portion de leur ouverture angulaire.

**5.** Dispositif selon l'une des revendications 1 ou 2, **caractérisé en ce que** les antennes (78, 79) sont agencées, selon une configuration formant une base d'interférométrie ambiguë, de façon à être séparées l'une de l'autre par un espace et à viser dans la même direction.

**6.** Dispositif selon l'une des revendications 1 ou 2, **caractérisé en ce que** les antennes (78, 79) sont agencées de façon à être espacées l'une de l'autre et viser dans des directions décalées l'une par rapport à l'autre d'un angle correspondant à une portion de l'ouverture angulaire.

**7.** Dispositif selon l'une quelconque des revendications 1 à 6, **caractérisé en ce que** l'ensemble antennaire (78,79) est directif en gisement.

**8.** Dispositif selon l'une quelconque des revendications 1 à 7, **caractérisé en ce que** l'ensemble antennaire (31, 32) est mobile en rotation selon un balayage mécanique autour d'un axe vertical (33), de façon à couvrir un secteur angulaire inférieur ou égal à 360° en gisement.

**9.** Dispositif selon l'une quelconque des revendications précédentes, **caractérisé en ce que** chaque antenne (41, 42) est constituée de sous-réseaux (43) indépendants, couvrant des bandes de fréquences adjacentes, l'ensemble des sous-réseaux couvrant la totalité de la bande de fréquences BH à explorer.

**10.** Dispositif selon la revendication 9, **caractérisé en ce que** chaque sous-réseau (43) est configuré de façon à être activé ou désactivé indépendamment des autres sous-réseaux.

**11.** Dispositif selon la revendication 10, **caractérisé en ce que** les sorties des sous-réseaux formant une même antenne sont sommées (64) après amplification (62) et filtrage (63), pour former une sortie unique par antenne.

**12.** Dispositif de détection et de caractérisation d'émissions radioélectriques (80), adapté à la réception et à la caractérisation d'émissions radioélectriques de fréquence centrale $F_0$ comprise dans une bande de fréquences BH, **caractérisé en ce qu'**il comporte au moins :

    - un dispositif de réception large bande (70) selon l'une des revendications 1 à 11 produisant deux signaux $I1_{FI}$ et $Q2_{FI}$ en fréquence intermédiaire ;
    - une chaîne de traitement (80) comportant elle-même :

        - des moyens de numérisation (81, 82) réalisant la conversion analogique-numérique des signaux I1 FI et Q2FI ;
        - des premiers moyens de traitement (83, 84) dont la fonction est d'effectuer, en sortie du dispositif de réception (70), après numérisation, un filtrage adapté des signaux $I1_{FI}$ et $Q2_{FI}$ numérisés ;
        - des deuxièmes moyens de traitement (87) dont la fonction est de réaliser d'une part la détection d'une émission par comparaison du niveau de signal reçu à un seuil de détection donné et d'autre part la mesure de la durée et de la période de répétition du signal reçu à partir de son enveloppe ;
        - des troisièmes moyens de traitement (814) dont la fonction est de réaliser, en parallèle du traitement réalisé par les deuxièmes moyens, à partir des signaux FI $I1_{FI}$ et $Q2_{FI}$ et après échantillonnage et numérisation (81, 82), une mesure de la fréquence de l'émission détectée ainsi qu'une mesure de gisement localisant la source de l'émission, cette fonction étant réalisée par mesure interférométrique entre les deux voies de réception $I1_{FI}$ et $Q2_{FI}$ après filtrage adapté (83, 84).

**13.** Dispositif selon la revendication 12, **caractérisé en ce que** les sorties $I1_{FI}$ et $Q2_{FI}$ du dispositif de réception (70) sont connectées après numérisation (81, 82) à l'entrée d'un filtre (83) adapté à la durée de l'impulsion attendue la plus courte.

**14.** Dispositif selon la revendication 12, **caractérisé en ce que** les sorties $I1_{FI}$ et $Q2_{FI}$ du dispositif de réception (70) sont connectées après numérisation à l'entrée d'un filtre (84) adapté au code de modulation attendu le plus court.

**15.** Dispositif selon l'une quelconque des revendications 12 à 14, **caractérisé en ce que** les deuxièmes moyens de traitement (87) réalisent une détection quadratique (85, 86) du signal délivré par les filtres adaptés.

**Patentansprüche**

**1.** Vorrichtung für den Breitbandempfang (70), die für den Empfang von radioelektrischen Emissionen mit einer Zentralfrequenz $F_0$ in einem Frequenzband BH geeignet ist, wobei die Vorrichtung mindestens umfasst:

    - zwei identische Ultra-Breitband-Antennen (78, 79) mit großer Verstärkung, die in mindestens einer Ebene ausgerichtet sind, wobei die zwei Antennen etwa in dieselbe Richtung zeigen, wobei jede der Antennen ausgehend von den aufgefangenen Emissionen ein radioelektrisches Signal S1 oder S2 produziert,
- eine Empfangskette, die zwei lokale, phasenkohärente Oszillatoren mit jeweiligen Frequenzen F1 und F2=F1+FI über der maximalen Frequenz des Bands BH aufweist, wobei die Empfangskette die Demodulierung der radioelektrischen Signale S1 und S2 in ein Signal in Zwischenfrequenz FI durchführt,

**dadurch gekennzeichnet, dass** das Signal in Zwischenfrequenz in zwei Schritten entsteht:

- zunächst durch Demodulieren des Signals S1 oder des Signals S2 durch ein Signal, das jeweils durch Frequenztransposition des anderen Signals, des jeweiligen Signals S2 oder S1, mittels des lokalen Frequenzoszillators F1 und durch Auswählen des unteren seitlichen Bands des erhaltenen Spektrums entsteht, wobei das erhaltene demodulierte Signal seinerseits derart gefiltert wird, dass nur das obere seitliche Band des nach Demodulierung erhaltenen Spektrums erhalten bleibt,
- danach durch Transponieren des durch Demodulieren des Signals S1 oder S2 mittels des lokalen Frequenzoszillators mit der Frequenz F2= F1+FI erhaltenen Signals in Zwischenfrequenz FI,

wobei das in Zwischenfrequenz produzierte Signal unabhängig von der Zentralfrequenz $F_0$ der empfangenen Signale auf eine konstante Zwischenfrequenz FI zentriert ist.

2. Vorrichtung für den Breitbandempfang (70), die für den Empfang von radioelektrischen Emissionen mit einer Zentralfrequenz $F_0$ in einem Frequenzband BH geeignet ist, wobei die Vorrichtung mindestens umfasst:

- zwei identische Ultra-Breitband-Antennen (78, 79) mit großer Verstärkung, die in mindestens einer Ebene ausgerichtet sind, wobei die zwei Antennen etwa in dieselbe Richtung zeigen, wobei jede der Antennen ausgehend von den aufgefangenen Emissionen ein radioelektrisches Signal S1 oder S2 produziert,
- eine Empfangskette, die zwei lokale Oszillatoren mit jeweiligen Frequenzen F1 und F2=F1+FI über der maximalen Frequenz des Bands BH aufweist, wobei die Empfangskette die Demodulierung der radioelektrischen Signale S1 und S2 in zwei Signale in Zwischenfrequenz $I1_{FI}$ und $Q2_{FI}$ durchführt,

**dadurch gekennzeichnet, dass** das die zwei Signale in Zwischenfrequenz $I1_{FI}$ und $Q2_{FI}$ in zwei Schritten entstehen:

- zunächst durch Demodulieren jedes der Signale S1 oder S2 durch ein jeweiliges Signal $Q_{S2}$ oder $I_{S1}$, das durch Frequenztransposition (72, 74) des anderen Signals, des jeweiligen Signals S2 oder S1, mittels eines Frequenzsignals F1 jeweils in Phasenquadratur oder in Phase mit dem lokalen Oszillator (77) der Frequenz F1 und durch Auswählen des unteren seitlichen Bands des erhaltenen Spektrums (73) entsteht, wobei die erhaltenen demodulierten Signale I1 und Q2 ihrerseits derart gefiltert werden, dass nur das obere seitliche Band des nach Demodulierung erhaltenen Spektrums erhalten bleibt,
- danach durch Transponieren der durch Demodulieren der Signale S1 und S2 (712, 713) mittels des lokalen Frequenzoszillators (711) mit der Frequenz F2= F1+FI erhaltenen Signale I1 und Q2 in Zwischenfrequenz FI,

wobei die in Zwischenfrequenz $I1_{FI}$ und $Q2_{FI}$ produzierten Signale unabhängig von der Zentralfrequenz $F_0$ der empfangenen Signale auf eine konstante Zwischenfrequenz FI zentriert sind.

3. Vorrichtung nach einem der Ansprüche 1 oder 2, **dadurch gekennzeichnet, dass** die Antennen (78, 79) benachbarte Antennen sind, die gemäß einer Phasenmonopulskonfiguration derart angeordnet sind, dass ihre Zielachsen in dieselbe Richtung gerichtet sind.

4. Vorrichtung nach einem der Ansprüche 1 oder 2, **dadurch gekennzeichnet, dass** die Antennen (78, 79) gemäß einer Amplitudenmonopuls-Antennenkonfiguration derart angeordnet sind, dass sich ihre Phasenzentren an derselben Stelle befinden und dass sie in nicht parallele Richtungen zielen, die sich voneinander in einem Winkel $\alpha$ gleich einem Abschnitt ihres Erfassungswinkeln unterscheiden.

5. Vorrichtung nach einem der Ansprüche 1 oder 2, **dadurch gekennzeichnet, dass** die Antennen (78, 79) gemäß einer Konfiguration angeordnet sind, die derart eine unbestimmte Interferometriebasis bildet, dass sie voneinander durch einen Abstand getrennt sind und in dieselbe Richtung zielen.

6. Vorrichtung nach einem der Ansprüche 1 oder 2, **dadurch gekennzeichnet, dass** die Antennen (78, 79) derart angeordnet sind, dass sie voneinander beabstandet sind und in Richtungen zielen, die zueinander in einem Winkel versetzt sind, der einem Abschnitt des Erfassungswinkels entspricht.

7. Vorrichtung nach einem der Ansprüche 1 bis 6, **da-**

**durch gekennzeichnet, dass** die Antennengruppe (78, 79) peilungsgerichtet ist.

8.  Vorrichtung nach einem der Ansprüche 1 bis 7, **dadurch gekennzeichnet, dass** die Antennengruppe (31, 32) gemäß einer mechanischen Abtastung um eine vertikale Achse (33) derart rotierend bewegbar ist, dass ein Winkelsektor unter oder gleich 360° durch Peilung abgedeckt ist.

9.  Vorrichtung nach einem der vorangehenden Ansprüche, **dadurch gekennzeichnet, dass** jede Antenne (41, 42) aus unabhängigen Unternetzen (43) gebildet ist, die benachbarte Frequenzbänder abdecken, wobei alle Unternetze die Gesamtheit des zu beobachtenden Frequenzbands BH abdecken.

10. Vorrichtung nach Anspruch 9, **dadurch gekennzeichnet, dass** jedes Unternetz (43) derart konfiguriert ist, dass es unabhängig von den anderen Unternetzen aktiviert oder deaktiviert ist.

11. Vorrichtung nach Anspruch 10, **dadurch gekennzeichnet, dass** die Ausgänge der Unternetze, die eine selbe Antenne bilden, nach Verstärkung (62) und Filterung (63) summiert (64) werden, um einen einzigen Ausgang je Antenne zu bilden.

12. Vorrichtung für die Erkennung und Charakterisierung von radioelektrischen Emissionen (80), die für den Empfang und die Charakterisierung von radioelektrischen Emissionen mit einer Zentralfrequenz $F_0$ in einem Frequenzband BH geeignet ist, **dadurch gekennzeichnet, dass** sie mindestens umfasst:

    - eine Breitbandempfangsvorrichtung (70) nach einem der Ansprüche 1 bis 11, die zwei Signale $I1_{FI}$ und $Q2_{F1}$ in Zwischenfrequenz produziert,
    - eine Verarbeitungskette (80), die selbst umfasst:

    - Digitalisierungsmittel (81, 82), die die Analog-Digital-Umwandlung der Signale $I1_{FI}$ und $Q2_{FI}$ durchführen,
    - erste Verarbeitungsmittel (83, 84), deren Aufgabe darin besteht, am Ausgang der Empfangsvorrichtung (70) nach Digitalisierung eine entsprechende Filterung der digitalisierten Signale $I1_{FI}$ und $Q2_{FI}$ durchzuführen,
    - zweite Verarbeitungsmittel (87), deren Aufgabe darin besteht, einerseits die Erkennung einer Emission durch Vergleich des empfangenen Signalniveaus mit einem bestimmten Erkennungsgrenzwert und andererseits das Messen der Dauer und Wiederholungsperiode des empfangenen Signals ausgehend von seiner Hülle durchzuführen,
    - dritte Verarbeitungsmittel (814), deren Aufgabe darin besteht, parallel zur von den zweiten Mitteln durchgeführten Verarbeitung ausgehend von den Signalen FI $I1_{FI}$ und $Q2_{FI}$ und nach Stichprobe und Digitalisierung (81, 82) eine Messung der Frequenz der erkannten Emission sowie eine Peilmessung, die die Emissionsquelle lokalisiert, durchzuführen, wobei diese Aufgabe durch interferometrische Messung zwischen den zwei Empfangswegen $I1_{FI}$ und $Q2_{FI}$ nach entsprechender Filterung (83, 84) durchgeführt wird.

13. Vorrichtung nach Anspruch 12, **dadurch gekennzeichnet, dass** die Ausgänge $I1_{FI}$ und $Q2_{FI}$ der Empfangsvorrichtung (70) nach Digitalisierung (81, 82) an den Eingang eines an die Dauer des erwarteten kürzesten Impulses angepassten Filters (83) angeschlossen werden.

14. Vorrichtung nach Anspruch 12, **dadurch gekennzeichnet, dass** die Ausgänge $I1_{FI}$ und $Q2_{FI}$ der Empfangsvorrichtung (70) nach Digitalisierung an den Eingang eines an den erwarteten kürzesten Modulationscode angepassten Filters (84) angeschlossen werden.

15. Vorrichtung nach einem der Ansprüche 12 bis 14, **dadurch gekennzeichnet, dass** die zweiten Verarbeitungsmittel (87) eine quadratische Erfassung (85, 86) des von den angepassten Filtern gelieferten Signals durchführen.

## Claims

1.  A broadband reception device (70) designed to receive radioelectric transmissions with a central frequency $F_0$ within a frequency band BH, said device comprising at least:

    - two identical ultra-broadband, high-gain antennae (78, 79), which are directive in at least one plane, said two antennae being substantially pointed in the same direction, each of said antennae producing a radioelectric signal S1 or S2 from the captured transmissions;
    - a reception chain comprising two phase-coherent local oscillators, with respective frequencies F1 and F2=F1+FI that are greater than the maximum frequency of the band BH, said reception chain demodulating said radioelectric signals S 1 and S2 into an intermediate frequency signal FI;

    **characterised in that** said intermediate frequency signal is obtained in two steps:

- firstly, by demodulating said signal S1 or said signal S2 by a signal respectively obtained by frequency transposition of the other signal, said signal S2 or S1, respectively, by means of said local frequency oscillator F1 and by selecting the lower sideband of the obtained spectrum, with the obtained demodulated signal in turn being filtered so as to only retain the upper sideband of the spectrum obtained after demodulation;
- then, by transposing into intermediate frequency FI the signal obtained by demodulating said signal S1 or S2 by means of the local oscillator of frequency F2 = F1+FI;

with the intermediate frequency signal that is produced being centred on an intermediate frequency FI that is constant regardless of the central frequency $F_0$ of the received signals.

2. The broadband reception device (70) designed to receive radioelectric transmissions with a central frequency $F_0$ within a frequency band BH, said device comprising at least:

- two identical ultra-broadband, high-gain antennae (78, 79), which are directive in at least one plane, said two antennae being substantially pointed in the same direction, each of said antennae producing a radioelectric signal S1 or S2 from the captured transmissions;
- a reception chain comprising two local oscillators, with respective frequencies F1 and F2=F1+FI that are greater than the maximum frequency of the band BH, said reception chain demodulating said radioelectric signals S1 and S2 into two intermediate frequency signals $I1_{FI}$ and $Q2_{FI}$;

**characterised in that** said two intermediate frequency signals $I1_{FI}$ and $Q2_{FI}$ are obtained in two steps:

- firstly, by demodulating each of said two signals S1 or S2 by a signal, $Q_{S2}$ or $I_{S1}$, respectively, obtained by frequency transposition (72, 74) of the other signal, said signal S2 or S1, respectively, by means of a frequency signal F1 that is respectively in phase quadrature or in phase with said local oscillator (77) of frequency F1 and by selecting the lower sideband of the obtained spectrum (73), with the obtained demodulated signals I1 and Q2 in turn being filtered so as to only retain the upper sideband of the spectrum obtained after demodulation;
- then, by transposing into intermediate frequency FI said signals I1 and Q2 obtained by demodulating said signals S1 and S2 (712, 713) by means of said local oscillator (711) of frequency F2 = F1+FI;

with the intermediate frequency signals $I1_{FI}$ and $Q2_{FI}$ that are produced being centred on an intermediate frequency FI that is constant regardless of the central frequency $F_0$ of the received signals.

3. The device according to claim 1 or 2, **characterised in that** said antennae (78, 79) are contiguous antennae arranged according to a phase monopulse configuration so that their axes of sight are directed in the same direction.

4. The device according to claim 1 or 2, **characterised in that** said antennae (78, 79) are arranged, according to an amplitude monopulse antenna configuration, so that their phase centres are located at the same location and so that they point in non-parallel directions, distinct from one another by an angle α that is equal to a portion of their angular aperture.

5. The device according to claim 1 or 2, **characterised in that** said antennae (78, 79) are arranged, according to a configuration forming an ambiguous interferometry base, so as to be spaced apart from one another by a space and to be aimed in the same direction.

6. The device according to claim 1 or 2, **characterised in that** said antennae (78, 79) are arranged so as to be spaced apart from one another and aimed in directions that are offset relative to one another by an angle that corresponds to a portion of the angular aperture.

7. The device according to any one of claims 1 to 6, **characterised in that** the antenna assembly (78, 79) is directive by bearing.

8. The device according to any one of claims 1 to 7, **characterised in that** the antenna assembly (31, 32) is rotationally mobile according to a mechanical scan about a vertical axis (33) so as to cover an angular sector that is less than or equal to 360° by bearing.

9. The device according to any one of the preceding claims, **characterised in that** each antenna (41, 42) is made up of independent sub-arrays (43) covering adjacent frequency bands, with all of said sub-arrays covering the entire frequency band BH to be explored.

10. The device according to claim 9, **characterised in that** each sub-array (43) is configured so as to be activated or deactivated independently of the other sub-arrays.

**11.** The device according to claim 10, **characterised in that** the outputs of the sub-arrays that form the same antenna are added (64) after amplification (62) and filtering (63) so as to form a single output per antenna.

**12.** A device for detecting and characterising radioelectric transmissions (80), designed to receive and to characterise radioelectric transmissions with a central frequency $F_0$ within a frequency band BH, **characterised in that** it comprises at least:

- one broadband reception device (70) according to any one of claims 1 to 11, producing two intermediate frequency signals $I1_{FI}$ and $Q2_{FI}$;
- one processing chain (80), which comprises:

- digitisation means (81, 82) carrying out the analogue-digital conversion of said signals $I1_{FI}$ and $Q2_{FI}$;
- first processing means (83, 84), the function of which is to carry out, at the output of said reception device (70) and after digitisation, matched filtering of the digitised signals $I1_{FI}$ and $Q2_{FI}$;
- second processing means (87), the function of which is to carry out, on the one hand, the detection of a transmission by comparing the received signal level with a given detection threshold and, on the other hand, by measuring the duration and the repetition period of the received signal on the basis of its envelope;
- third processing means (814), the function of which is to carry out, at the same time as the processing carried out by said second means, on the basis of FI signals $I1_{FI}$ and $Q2_{FI}$ and after sampling and digitisation (81, 82), a measurement of the frequency of the detected transmission, as well as a bearing measurement locating the source of the transmission, said function being carried out by an interferometric measurement between the two reception channels $I1_{FI}$ and $Q2_{FI}$ after matched filtering (83, 84).

**13.** The device according to claim 12, **characterised in that** the outputs $I1_{FI}$ and $Q2_{FI}$ of said reception device (70) are connected after digitisation (81, 82) to the input of a filter (83) matched to the duration of the shortest expected pulse.

**14.** The device according to claim 12, **characterised in that** said outputs $I1_{FI}$ and $Q2_{FI}$ of said reception device (70) are connected after digitisation to the input of a filter (84) matched to the shortest expected modulation code.

**15.** The device according to any one of claims 12 to 14, **characterised in that** said second processing means (87) carry out a quadratic detection (85, 86) of the signal delivered by said matched filters.

| Capture des ondes EM | Filtrage amont | Amplification HF | | | | | | | Détection | Filtrage vidéo | Amplification vidéo |

Principe d'une chaine de détection directe large bande

# Fig. 1

| Capture des ondes EM | Filtrage de présélection | Amplification HF | Transposition en fréquence | Filtrage FI | Amplification FI | Détection | Filtrage vidéo | Amplification vidéo |

Génération de fréquence

Principe d'une chaine de détection superhétérodyne

# Fig. 2

Fig. 3

Face A :
Deux antennes de 3 sous-
réseaux, (vue de face)

Face B :
Deux antennes de 2 sous-
réseaux, (vue de dos)

| Fréquence 0, Bande ΔF0 | Fréquence 0, Bande ΔF0 |
|---|---|
| Fréquence 1, Bande ΔF1 | Fréquence 1, Bande ΔF1 |
| Fréquence 2, Bande ΔF2 | Fréquence 2, Bande ΔF2 |

| Fréquence 3, Bande ΔF3 | Fréquence 3, Bande ΔF3 |
|---|---|
| Fréquence 4, Bande ΔF4 | Fréquence 4, Bande ΔF4 |

Face A          Face B

Vue de dessus

Fig. 4

| Panneau A<br>Vue de face | | | Panneau B<br>Vue de face | | | Panneau C<br>Vue de face | |
|---|---|---|---|---|---|---|---|
| Fréquence 0,<br>Bande ΔF0 | Fréquence 0,<br>Bande ΔF0 | | Fréquence 2,<br>Bande ΔF3 | Fréquence 2,<br>Bande ΔF3 | | Fréquence 4,<br>Bande ΔF3 | Fréquence 4,<br>Bande ΔF3 |
| Fréquence 1,<br>Bande ΔF1 | Fréquence 1,<br>Bande ΔF1 | | Fréquence 3,<br>Bande ΔF4 | Fréquence 3,<br>Bande ΔF4 | | Fréquence 5,<br>Bande ΔF5 | Fréquence 5,<br>Bande ΔF5 |
| | | | | | | Fréquence 6,<br>Bande ΔF6 | Fréquence 6,<br>Bande ΔF6 |

43

43

43

51

51

51

51

B

A

C

Vue de dessus

# Fig. 5

Fig. 6

EP 2 673 651 B1

Fig. 7

80

I1$_{FI}$    Q2$_{FI}$

81
82

CAN
100MHz

CAN
100MHz

83

6MHz

10kHz
84

86
85

I²+Q²
I²+Q²

Décimation
0,3us
88

Décimation
0,3us

Démodulation
I x Q

Démodulation
I x Q

Corrélateur d'enveloppe
glissant court (1ms)
89

Corrélateur d'enveloppe
glissant long (50ms)

Mémorisation (FIFO)

Détection
d'impulsions

Détection
signaux LPI
87

Sélection des
échantillons

ET

812

Corrélation
multimodèles

Extraction LI, PRF

811

Extraction
fréquence porteuse
et gisement

Classification des
Menace radar

Exploitation

IHM (PC)

813

Contrôle rotation et
pointage d'antenne

814

# Fig. 8

Fig. 9

Fig. 10

**EP 2 673 651 B1**

## RÉFÉRENCES CITÉES DANS LA DESCRIPTION

### Documents brevets cités dans la description

- FR 2742551 A1
- FR 1100337